# EUROPÄISCHE PATENTSCHRIFT

(11) **EP 2 281 434 B1**
(45) Veröffentlichungstag und Bekanntmachung des Hinweises auf die Patenterteilung: **16.10.2013**
(21) Anmeldenummer: 10006386.6
(22) Anmeldetag: 19.06.2010
(51) Int. Cl.: A01D 89/00, A01D 43/08, A01D 69/00, A01D 69/02

(54) **Vorsatzgerät mit Querfördereinrichtung und Drehzahlanpassung**
Header with transverse conveyer and rotational speed adjustment
Appareil attaché doté d'un dispositif de transport transversal et d'une adaptation de vitesse de rotation

(30) Priorität: 30.07.2009 DE 102009035691
(43) Veröffentlichungstag der Anmeldung: 09.02.2011
(73) Patentinhaber: CLAAS Saulgau GmbH, 88348 Bad Saulgau (DE)
(72) Erfinder: Rauch, Hans, 88348 Bad Saulgau (DE)

(56) Entgegenhaltungen:
- EP-A1- 1 360 891
- EP-A1- 1 570 724
- EP-A2- 1 402 769
- DE-A1- 19 812 500

## Beschreibung

Die Erfindung betrifft ein Verfahren und ein Antriebssystem zum Betreiben eines Vorsatzgeräts mit einer Querfördereinrichtung zum Ernten von stängeligem Erntegut gemäß dem Oberbegriff der unabhängigen Ansprüche 1 und 7.

### Stand der Technik

Bekannt sind Vorsatzgeräte für Feldhäcksler, wie Aufsammeleinrichtungen (Pick up), Direktschneidwerke, Pflückvorsätze (Maispflücker), Maisgebisse mit sogenannten Querfördereinrichtungen, ausgebildet als Querförderschnecken. Diesen Vorsatzgeräten gemeinsam ist, dass die Arbeitsbreiten größer sind als der Einzugsbereich der Einzugsorgane der Häckseleinheit, die den Einzugsspalt des Häckslers bilden. Daher kommt der Querfördereinrichtung die Aufgabe zu, das zu erntende Erntegut, welches über die gesamte Arbeitsbreite des Vorsatzgerätes von diesem erfasst und bearbeitet wird, beidseitig der vertikalen Längsmittelebenen jeweils in die Mitte des Feldhäckslers bzw. dessen Einzugsspaltes zu fördern. Bei großen Arbeitsbreiten der Vorsatzgeräte, die zwischenzeitlich die 10 m Marke überschritten haben, wird die momentane Beschaffenheit des Erntegutes immer bedeutsamer für einen optimalen und störunanfälligen Betriebsablauf im laufenden Ernteprozess. Mit der momentanen Beschaffenheit ist insbesondere auch gemeint, dass selbst auf einem größeren Feld sich die Beschaffenheit des Ernteguts lokal ändern kann, welches beispielsweise auf unterschiedliche Zusammensetzung des Bodens und seiner Feuchtigkeit, Beschattung oder sonstiger Einflüsse zurück zu führen ist. Es handelt sich hierbei demzufolge um Einflussgrößen, die das Wachstum der Pflanzen vor dem Ernteprozess maßgeblich mitbestimmt haben und die als vorgegeben hingenommen werden müssen. Hinzu kommt, dass diese Einflussgrößen auch den momentanen Massedurchsatz des Gutstroms bei Häckslern, Ballenspressen oder Selbstladewagen mit bestimmen. Dieses zum Beispiel nimmt Einfluss auf die momentane Dicke des zu verarbeitenden Futterkissens des Gutstroms, welches beispielsweise auch Einfluss auf die Drehzahl der Einzugs- und Vorpresswalzen nehmen kann. Diese momentan sich verändernden Betriebsparameter sind häufig ursächlich für Störungen im Betriebsablauf, die beispielsweise zu Verstopfungen mit unerwünschten Wickeleffekten an den Förderelementen, beispielsweise an einer Förderschecke eines Vorsatzgerätes, führen. Bekannte Lösungen weisen dazu Hydraulikmotore auf, die aber systembedingt hohe Wärmeverluste und daher schlechte Wirkungsgrade aufweisen. Da es sich hierbei zugleich um hohe Antriebsleistungen im zweistelligen KW-Bereich handelt, die zudem hohe Drehmomentspitzen abdecken müssen, damit es nicht zu vorzeitigen Blockierungen der Querfördereinrichtung kommen kann, sind zudem hohe Leistungsreserven in dem hydraulischen Antriebssystem vorzuhalten, damit der hydraulische Antrieb über die gebotene Antriebssteife verfügt. Dieses führt dann zu entsprechend kostenintensiven Bauelementen der Hydraulik, welche derartige Antriebssysteme unwirtschaftlich machen und die Kosten derartiger Vorsatzgeräte in die Höhe treiben.

Aus der DE 198 12 500 A1 ist eine Zuführvorrichtung für einen Feldhäcksler bekannt, mit der sich die im Häckselbetrieb erzielte Schnittlänge einstellen lässt. Die Einzugswalzen der Zuführvorrichtung werden dazu über ein Getriebe mit einer variablen Ausgangsdrehzahl angetrieben. Das Getriebe ist als Planetengetriebe ausgeführt, das primär über einen mechanischen Antrieb angetrieben wird. Durch Überlagerung mit der Antriebsleistung eines zusätzlichen in das Planetengetriebe eingehenden Motors wird eine stufenlose Drehzahlvariation für die Einzugswalzen ermöglicht. Weitere Arbeits- und/oder Förderaqgregate werden durch das Getriebe nicht antrieben. Die Problematik von Erntegutstauungen im Bereich von Vorsatzgeräten wird in der DE 198 12 500 A1 nicht thematisiert.

### Aufgabenstellung

Es ist die Aufgabe der Erfindung den sich momentan veränderten äußeren Betriebsparametern im eingangs beschriebenen Sinn schnell und wirksam durch ebenso schnelle Anpassung und Optimierung der einstellbaren antriebsseitigen Betriebsparameter im besonders kostengünstigen und damit wirtschaftlichen Bereich begegnen zu können und um damit zugleich betriebsbedingte Störungen wie Verstopfungen des Gutflusses zu vermeiden, um damit Ausfallzeiten und Unfallrisiken durch Störungsbeseitigungen zu mindern..

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung besteht darin, den Förder - bzw. Gutstrom eines Vorsatzgerätes für Feldhäcksler, für Aufsammeleinrichtungen von Ballenpressen oder Selbstladewagen durch die Steuerung bzw. Regelung der Drehzahl einer Querfördereinrichtung, die diesen Erntemaschinen gemeinsam ist, optimal im laufenden Betrieb einstellen und ggf. regeln zu können, und zwar unabhängig von allen anderen angetriebenen Einzugs- und Förderelementen, die an dem Bearbeitungsprozess teilnehmen.

Die Erfindung beschreibt ein Verfahren und eine Vorrichtung zum Betreiben eines Vorsatzgeräts insbesondere für Feldhäcksler, Ballenpressen oder Selbstladewagen, mit wenigstens zwei umlaufend angetriebenen Einheiten, bestehend aus wenigstens einer Aufnahmeeinheit, einer Querfördereinrichtung und einer dieser nach geordneten Erntegut weiterverarbeitenden Einheit, wobei die Antriebe der Einheiten einen verzweigten Antriebsstrang bilden und der verzweigte Antriebsstrang wenigstens eine Drehmoment aufspaltende Getriebeeinheit aufweist.

Das Verfahren dient zum Betreiben eines Vorsatzgeräts, insbesondere für Feldhäcksler, Ballenpressen oder Selbstladewagen, mit wenigstens drei umlaufend angetriebenen Einheiten, bestehend aus wenigstens einer Aufnahmeeinheit, einer Querfördereinrichtung und einer dieser nach geordneten Erntegut weiterverarbeitenden Einheit, wobei die Antriebe der Einheiten einen verzweigten Antriebsstrang bilden und der verzweigte Antriebsstrang wenigstens eine Drehmoment aufspaltende Getriebeeinheit aufweist, wobei der Antrieb der Querfördereinrichtung (2) Teil einer leistungsverzweigten Getriebeeinheit (14) ist und die Getriebeeinheit (14) wenigstens einen ersten Antriebseingang (37) und einen zweiten Antriebseingang (38) und wenigstens zwei Abtriebsausgänge (39,40) aufweist, wobei der erste Antriebseingang (37) Teil eines Antriebsstrangs mit einer mechanischen Kupplungs- und Verbindungseinrichtung zur Abtriebswelle des Verbrennungsmotors des Träger- oder Zugfahrzeugs ist und über eine Durchgangswelle (15) mit einem ersten Abtriebsausgang (39) zum direkten Antrieb der Aufnahmeeinheit (3) verbunden ist und der zweite Antriebseingang (38) einen in seiner Motordrehzahl (n_{M}) ansteuer- und/oder regelbaren Nebenantriebsmotor (23) umfasst, wobei das Antriebsdrehmoment (M3) des ersten Antriebseingangs (37) und das Antriebsdrehmoment (M7) des zweiten Antriebseingangs (38) über ein Planetenradgetriebe (27) nach dem Superpositionsprinzip derart miteinander gekoppelt sind, dass über einen zweiten Abtriebsausgang (40) die Drehzahl (n_{Q}) der Querfördereinrichtung (2) fernbedienbar der aus Fahrerkabine oder in Abhängigkeit eines vom Gutfluss abhängigen Regelvorgangs gesteuert oder geregelt wird.

Die Vorrichtung dient der Umsetzung des Verfahrens und ist gekennzeichnet dadurch, dass der Antrieb der Querfördereinrichtung (2) Teil einer leistungsverzweigten Getriebeeinheit (14) ist und die Getriebeeinheit (14) wenigstens einen ersten Antriebseingang (37) und einen zweiten Antriebseingang (38) mit wenigstens zwei Abtriebsausgängen (39,40) aufweist, wobei der erste Antriebseingang (37) Teil eines vorgelagerten Antriebsstrangs mit einer Verbindung zur Abtriebswelle des Verbrennungsmotors des Träger- oder Zugfahrzeugs ist und über eine Durchgangswelle (15) mit einem ersten Abtriebsausgang (39) zum direkten Antrieb der Aufnahmeeinheit (3) verbunden ist und der zweite Antriebseingang (38) einen in seiner Motordrehzahl (n_{M}) ansteuer- und/oder regelbaren Nebenantriebsmotor (23) umfasst, wobei der erste Antriebseingang (37) und der zweite Antriebseingang (38) über ein Planetenradgetriebe (27) gekoppelt sind derart, dass über einen zweiten Abtriebsausgang (40) die Abtriebsdrehzahl (n_{Q}) zum Antrieb der Querfördereinrichtung (2) veränderbar ist.

Der Grund für diese erfinderische Ausgestaltung ist u. A. darin zu sehen, einer drohenden Verstopfung und damit einer Blockade der gesamten Fördereinrichtung rasch und wirksam entgegen wirken zu können, welches zugleich einen wesentlicher Beitrag zu Herabsetzung des Unfallrisikos bei einer Störungsbeseitigung darstellt, da bekanntlich in dieser Art von Störbeseitigung die Hauptursache schwerer Unfalle liegt.

Der Fahrer, beispielsweise der eines Feldhäckslers, hat den Ernteprozess und damit den Erntegutfluss in seinem Blickfeld. Aufgrund seiner Erfahrungen erkennt er sofort sich ankündigende Veränderungen des zu erwartenden Gutflusses, beispielsweise am Pflanzenwuchs. Eine - wenn auch unerwünschte Variante - die Erntemaschine auf diese sich ankündigenden Veränderungen vorbereiten zu können besteht darin, die Fahrgeschwindigkeit zu mindern oder ggf. auch zu erhöhen. Erfindungsgemäß hingegen kann er dieses unter Beibehaltung der Fahrgeschwindigkeit auch dadurch ausgleichen, in dem er die Drehzahl der Querfördereinrichtung durch manuellen Eingriff in sein Steuersystem innerhalb der Fahrerkabine unter Beibehaltung der Fahrgeschwindigkeit verändert. Der Sollwertgeber kann beispielsweise ein Drehpotentiometer in einer Steuertafel sein oder auch ein Tatschscreen auf dem Display seiner Bedienerstation. Unabhängig davon wird ein Antriebsstrang des motorischen Antriebs eines leistungsverzweigten Getriebes, ausgebildet als Planetengetriebe angesteuert. Dieser Antriebsstrang als Nebenantrieb ist vorzugsweise als Hydraulikmotor als hydraulische Welle mit vergleichsweise geringer Abtriebsleistung ausgebildet und er ist direkt mit dem Sonnenrad des Planetengetriebes gekoppelt. Der Hauptantriebsstrang hingegen ist über entsprechend ausgebildete Antriebsmittel, wie Kardanwellen oder Transmissionstriebe, wie Zahnriemen oder Keilriemenkraftbänder mit dem Antriebsmotor (Verbrennungsmotor) des Trägerfahrzeugs bzw. des Feldhäckslers verbunden. Das Hauptwesensmerkmal des Hauptantriebsstrangs ist sein quasi verlustfreier Wirkungsgrad und zugleich seine Antriebssteife, welche erheblich Leistungsreserven in sich verkörpert. Letzteres ist wichtig für das Durchzugsvermögen, um drohende Verstopfungen überwinden zu können, um beim Reversieren das erforderliche Losbrechmoment aufbringen zu können.

Allein durch die Variation der Drehzahl des Hydraulikmotors bzw. die des Sonnenrades ist ohne Drehrichtungsumkehr die Abtriebsdrehzahl des leistungsverzweigten Getriebes und damit die Drehzahl der Querfördereinrichtung stufenlos und sensibel veränderbar und sogar deren Drehrichtung ohne Stillsetzung des Hauptantriebsstrangs umkehrbar. Alternativ kann selbstverständlich auch der Hydraulikmotor durch einen Elektromotor ersetzt werden. Hier bietet sich beispielsweise ein Gleichstrommotor oder auch ein Wechselstrommotor, dessen Drehzahl beispielsweise von einem Tyristor gesteuerten Frequenzumrichter gesteuert wird, an. Gerade diese beiden elektrischen Antriebsvarianten einer Drehzahlsteuerung bieten sich durch die fortschreitende leistungsfähige Bordelektrik der Selbstfahrer und auch der Traktoren als preiswerte Variante an.

An Hand des nachfolgenden Ausführungsbeispiels soll die Erfindung näher erläutert und dargestellt und beschrieben werden.

Es zeigen:
- Fig. 1: eine Systemdarstellung eines Antriebs nach der Erfindung
- Fig. 2: eine vergrößerte Systemdarstellung der Getriebeeinheit

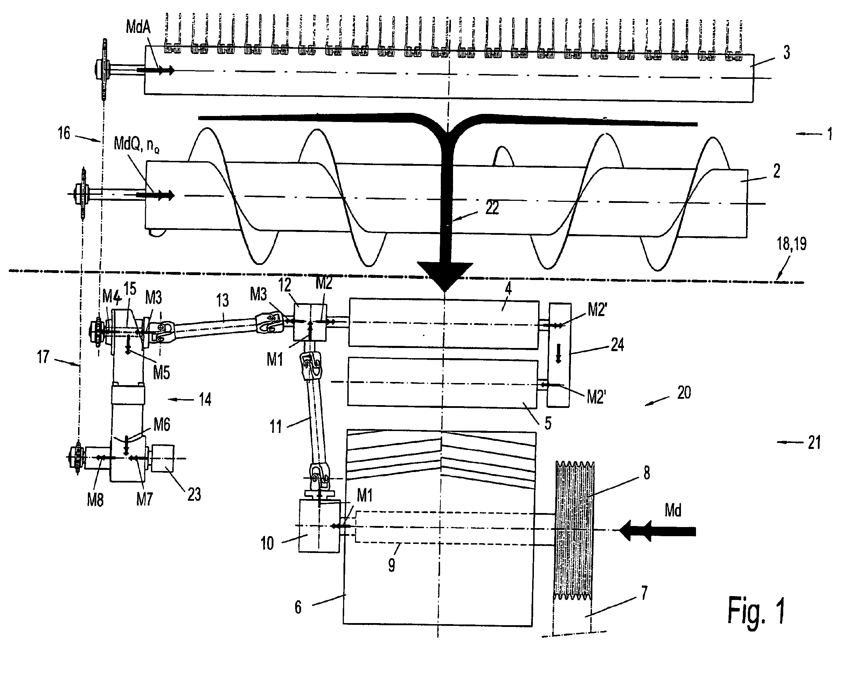

Fig. 1 zeigt eine Systemdarstellung eines Antriebssystems nach der Erfindung anhand eines Ausführungsbeispiels für einen Feldhäcksler in Verbindung mit einer Querfördereinrichtung 2 als Teil eines Vorsatzgeräts 1, ausgeführt mit einer vorgelagerten Aufsammeleinrichtung 3, ausgeführt als Pick up. Dem Vorsatzgerät 1 nachgeordnet ist das Häckselaggregat 20, im Wesentlichen bestehend aus den übereinander liegenden Einzugselementen 4,5, bestehend aus den Einzugswalzen 4, die den Einzugsspalt bilden, und den Vorpresswalzen 5, sowie der Häckseltrommel 6.

Die Häckseltrommel 6 wird angetrieben von einem Transmissionsantrieb 7, der eine Treibriemen- bzw. Keilriemenscheibe 8 umschlingt. Dieser Transmissionsantrieb 7 ist indirekt verbunden mit dem Verbrennungsmotor des dem Fachmann bekannten Trägerfahrzeugs, des Feldhäckslers, so dass dieses keiner näheren Erläuterung bedarf. Der Transmissionsantrieb 7 prägt dem Antriebssystem das Hauptdrehmoment Md auf, welches nicht nur die Häckseltrommel 6 antreibt, sondern welches zugleich über die Durchgangswelle 9 der Häckseltrommel 6 mit allen weiteren umlaufend angetriebenen Maschinenelementen 2,3,4,5 - sowohl denen des Häckselaggregats 20, als auch denen des Vorsatzgerätes 1 - in Antriebsverbindung steht. Die Trennlinie 18 symbolisiert dabei die Schnittstelle 19 zwischen dem Häckselaggregat 20, welches Teil des Trägerfahrzeugs 21 ist, und dem Vorsatzgerät 1.

Die prinzipielle Darstellung des gesamten Antriebsstrangs in Fig.1, ausgehend von der Treibriemenscheibe 8, zeigt die Verläufe und die Aufspaltung der Antriebs-Teildrehmomente. Das Kegelradgetriebe 10 lenkt das Teildrehmoment M1 auf die Kardanwelle 11, und dieses wird in das Kegelradgetriebe 12 eingeleitet und von diesem aufgespaltet in die Teildrehmomente M2 und M3. Das Teildrehmoment M2 treibt die Einzugs- und Vorpresswalzen 4,5 an, wobei das Teildrehmoment M2' mittels eines Stirnradgetriebes 24 an die hinter den Einzugswalzen liegenden Vorpresswalzen 5 übergeben wird.
Das Teildrehmoment M3 wird über die Kardanwelle 13 in die Getriebeeinheit 14 eingeleitet und ein Teildrehmoment M4 wird über die Durchgangswelle 15 direkt an den ersten Antriebsausgang 39 und damit an den Umschlingungstrieb 16 zum Antrieb der Aufsammeleinrichtung 3 mit dem Antriebsdrehmoment MdA weitergegeben. Innerhalb der Getriebeeinheit 14 wird das Teildrehmoment M5, welches von dem ersten Kegelradgetriebe 25 an die Wellenverbindung 28 weitergegeben wird, als Antriebsdrehmoment M6 in das zweite Kegelradgetriebe 26 eingeleitet, welchem ein weiteres zusätzliches Drehmoment M7, ausgehend von dem zweiten Antriebseingang 38, nach dem Superpositionsprinzip überlagert wird und welche zusammen am zweiten Abtriebsausgang 40 ein Abtriebsdrehmoment M8 mit der Drehzahl n_{A} erzeugen und das über den Umschlingungstrieb 17 als Antriebsdrehmoment MdQ an die Querfördereinrichtung 2, ausgebildet als Querförderschnecke, weitergegeben wird. Dabei ist der Getriebeeinheit 14 als zweiter Antriebseingang 38 ein Nebenantriebsmotor 23 zugeordnet, der eben dieses zusätzliche Drehmoment M7 erzeugt.

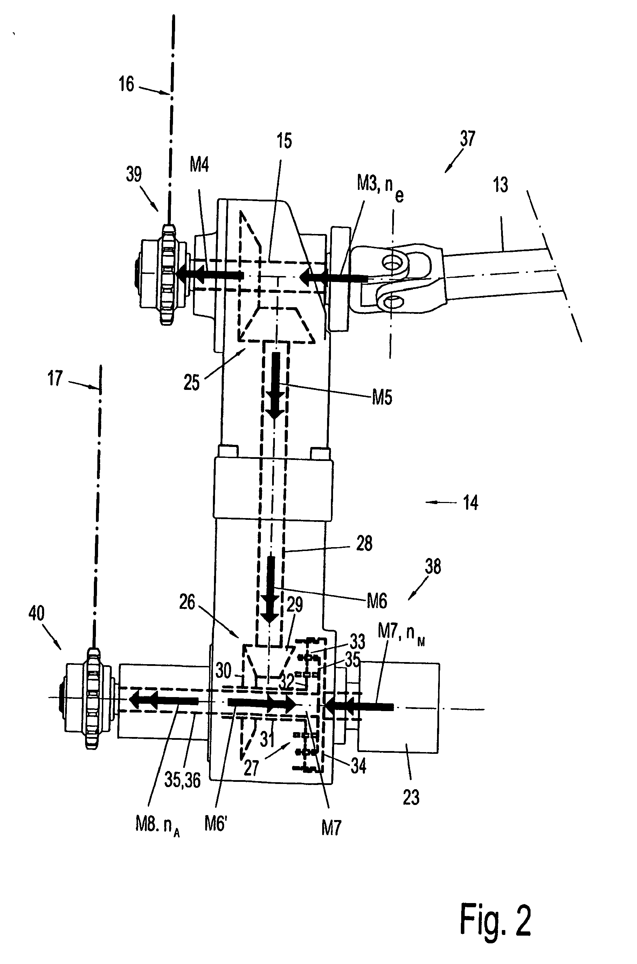

In Fig.2 ist eine vergrößerte Systemdarstellung der Getriebeeinheit 14 dargestellt. Die Getriebeeinheit 14 umfasst zwei Antriebseingänge 37,38 und zwei Antriebsausgänge 39,40. Dabei besteht die Getriebeeinheit 14 aus einem ersten Kegelradgetriebe 25, einem zweiten Kegelradgetriebe 26 und einem Planetenradgetriebe 27, die in einem ihnen gemeinsamen Gehäuse untergebracht sind. Über den Kardanantrieb 13 wird das Teildrehmoment M3 in den Antriebseingang 37 mit der Eingangsdrehzahl n_{E} als Eingangsdrehmoment M3 in die Getriebeeinheit 14 eingekoppelt. Das erste Kegelradgetriebe 25 greift das Drehmoment M5 von der Durchgangswelle 15 ab und leitet dieses über eine Wellenverbindung 28 als Drehmoment M6 an das Ritzel 29 des zweiten Kegelradgetriebes 26 weiter. Das Tellerrad 30 des Kegelradgetriebes 26 ist drehfest mit der Hohlwelle 31 verbunden an dem endseitig ebenfalls drehfest mit der Hohlwelle 31 sich das Sonnenrad 32 des Planetengetriebes 27 befindet. Die Abtriebswelle 36 ist zugleich auch als Planetenträger 35 ausgebildet, welcher die Planetenräder 33 aufnimmt, die mit dem Sonnenrad kämmen. Außerdem kämmen die Planetenräder 33 mit dem Außenrad 34 mit dessen Innenverzahnung, wobei das Außenrad 34 mit dem Nebenantriebsmotor 23 antriebsseitig und drehfest gekoppelt ist. Die Drehmomente M6' und M7 des Nebenantriebsmotors 23 überlagern sich nach dem Superpositionsprinzip und nach den Gesetzmäßigkeiten eines Planetenradgetriebes, die dem Fachmann bekannt sind und daher an dieser Stelle nicht näher erläutert werden müssen, wodurch sich das Drehmoment M8 an der Abtriebswelle 36 mit einer Abtriebsdrehzahl n_{A} der Getriebeeinheit einstellt. Die Abtriebsdrehzahl n_{A} ist aber u.a. abhängig von der Drehzahl n_{M} des Nebenantriebsmotors 23. Ist die Drehzahl n_{M} des Nebenantriebsmotors 23 durch Ansteuerung oder Regelung variabel, kann hiermit die Ausgangsdrehzahl nicht nur in ihrem Betrag, sondern auch in ihrer Drehrichtung variiert werden, welches in diesem Falle erfinderisch genutzt wird, um die Drehzahl n_{Q} der Querfördereinrichtung 2, in dem Ausführungsbeispiel ausgeführt als Förderschecke mit Links- und Rechtsgewinde, zu steuern und/oder zu regeln. Die Umkehrung der Drehrichtung der Abtriebsdrehzahl n_{A} wird für den Reversiervorgang genutzt, so dass dazu kein besonderes Schaltgetriebe erforderlich ist.

Ein weiterer Vorteil der Erfindung besteht darin, dass die Art des Antriebs gemäß der beispielhaft dargelegten Getriebeeinheit auch für Regelzwecke herangezogen werden kann. Werden beispielsweise die Drehzahl der Einzugs- und Vorpresswalzen abhängig vom Gutstrom 22, der sensorisch in seinem Massedurchsatz erfasst wird, variiert, kann diese Drehzahl als Prozessführungsgröße für die Regelung der Drehzahl n_{Q} der Querfördereinrichtung 2 genutzt werden, ohne dass davon die Drehzahl der Aufsammeleinrichtung oder gar die Fahrgeschwindigkeit berührt ist. Dabei kann die Drehzahl n_{Q} der Querfördereinrichtung 2 der Drehzahländerung der Vorpresswalzen je nach vorgegebener und angesteuerter Regelkurve beispielsweise proportional, überproportional steigend oder überproportional, oder auch progressiv steigend oder auch degressiv fallend verlaufen. Dieses ist erfindungsgemäß durch die Ansteuerung der Drehzahl n_{M} des Nebenantriebsmotors 23 auf besonders einfache Art und Weise ohne Schaltgetriebe und hochenergieeffizient möglich, da der weitaus größte Anteil von etwa 85% des Antriebsdrehmoments der Querfördereinrichtung 2 dem besonders antriebssteifen rein mechanischen Ast des Antriebsstrangs, bestehend aus den Kardanwellen 11,13, entnommen wird.

Der Nebenantriebsmotor 23 ist vorzugsweise als Hydraulikmotor ausgebildet, der von einer Regelpumpe gespeist wird. Alternativ kann dieses aber auch ein regelbarer Gleichstrom oder Wechselstrommotor oder Tyristor gesteuerter Servomotor, und besonders vorteilhaft ein Getriebemotor mit Untersetzungsgetriebe sein, um den Vorteil einer möglichst hohen Motordrehzahl zu nutzen, welches den Wirkungsgrad nachhaltig verbessert.

### Bezugszeichenliste

- 1: Vorsatzgerät
- 2: Querfördereinrichtung (Förderschecke, umlaufendes Maschinenelement)
- 3: Aufsammeleinrichtung (Pick up, umlaufendes Maschinenelement
- 4: Einzugselemente (Einzugswalzen, umlaufendes Maschinenelement)
- 5: Einzugselemente (Vorpresswalzen, umlaufendes Maschinenelement)
- 6: Häckseltrommel
- 7: Transmissionsantrieb
- 8: Treibriemenscheibe, Keilriemenscheibe
- 9: Durchgangswelle
- 10: Kegelradgetriebe
- 11: Gelenkwelle (Kardanwelle)
- 12: Kegelradgetriebe
- 13: Gelenkwelle (Kardanwelle)
- 14: Getriebeeinheit
- 15: Durchgangswelle
- 16: Umschlingungstrieb
- 17: Umschlingungstrieb
- 18: Trennlinie
- 19: Schnittstelle
- 20: Häckselaggregat
- 21: Trägerfahrzeug
- 22: Gutfluss, Gutstrom
- 23: Nebenantriebsmotor
- 24: Stirnradgetriebe
- 25: erstes Kegelradgetriebe
- 26: zweites Kegelradgetriebe
- 27: Planetengetriebe
- 28: Wellenverbindung
- 29: Ritzel
- 30: Tellerrad
- 31: Hohlwelle
- 32: Sonnenrad
- 33: Planetenrad
- 34: Außenrad
- 35: Planetenträger
- 36: Abtriebswelle
- 37: Antriebseingang
- 38: Antriebseingang
- 39: Abtriebsausgang
- 40: Abtriebsausgang

- Md: Hauptdrehmoment
- MdA: Antriebsdrehmoment Aufsammeleinrichtung
- MdQ: Antriebsdrehmoment Querfördereinrichtung
- M1: Teildrehmoment
- M2,M2': Teildrehmoment
- M3: Teildrehmoment
- M4: Teildrehmoment
- M5: Teildrehmoment
- M6,M6': Teildrehmoment
- M7: Teildrehmoment
- n_{A}: Abtriebsdrehzahl
- n_{E}: Eingangsdrehzahl
- n_{M}: Motordrehzahl
- n_{Q}: Drehzahl der Querfördereinrichtung

## Patentansprüche

1. Verfahren zum Betreiben eines Vorsatzgeräts (1), insbesondere für Feldhäcksler, Ballenpressen oder Selbstladewagen, mit wenigstens drei umlaufend angetriebenen Einheiten, bestehend aus wenigstens einer Aufnahmeeinheit (3), einer Querfördereinrichtung (2) und einer dieser nachgeordneten Erntegut weiterverarbeitenden Einheit (4, 5), wobei die Antriebe der Einheiten (2, 3, 4, 5) einen verzweigten Antriebsstrang bilden und der verzweigte Antriebsstrang wenigstens eine Drehmoment aufspaltende Getriebeeinheit (14) aufweist, **dadurch gekennzeichnet, dass** der Antrieb der Querfördereinrichtung (2) Teil einer leistungsverzweigten Getriebeeinheit (14) ist und die Getriebeeinheit (14) wenigstens einen ersten Antriebseingang (37) und einen zweiten Antriebseingang (38) und wenigstens zwei Abtriebsausgänge (39,40) aufweist, wobei der erste Antriebseingang (37) Teil eines Antriebsstrangs mit einer mechanischen Kupplungs- und Verbindungseinrichtung zur Abtriebswelle des Verbrennungsmotors des Träger- oder Zugfahrzeugs ist und über eine Durchgangswelle (15) mit einem ersten Abtriebsausgang (39) zum direkten Antrieb der Aufnahmeeinheit (3) verbunden ist und der zweite Antriebseingang (38) einen in seiner Motordrehzahl (n_{M}) ansteuer- und/oder regelbaren Nebenantriebsmotor (23) umfasst, wobei das Antriebsdrehmoment (M3) des ersten Antriebseingangs (37) und das Antriebsdrehmoment (M7) des zweiten Antriebseingangs (38) über ein Planetenradgetriebe (27) nach dem Superpositionsprinzip derart miteinander gekoppelt sind, dass über einen zweiten Abtriebsausgang (40) die Drehzahl (n_{Q}) der Querfördereinrichtung (2) fernbedienbar aus der Fahrerkabine oder in Abhängigkeit eines vom Gutfluss abhängigen Regelvorgangs gesteuert oder geregelt wird.

2. Verfahren nach Anspruch 1, **dadurch gekennzeichnet, dass** die Getriebeeinheit (14)Teil einer Steuerkette ist.

3. Verfahren nach Anspruch 1, **dadurch gekennzeichnet, dass** die Getriebeeinheit (14)Teil einer Regelstrecke ist.

4. Verfahren nach Anspruch 1, **dadurch gekennzeichnet, dass** die Drehzahl der Einzugselemente (4,5) abhängig vom Gutstrom (22) erfasst und als Prozessführungsgröße für die Regelung der Drehzahl (n_{Q}) der Querfördereinrichtung (2) genutzt wird.

5. Verfahren nach Anspruch 4, **dadurch gekennzeichnet, dass** die Drehzahl (n_{Q}) der Querfördereinrichtung (2) der Drehzahländerung der Einzugselemente (4,5) entsprechend einer vorgegebenen Regelkurve proportional, überproportional steigend oder überproportional fallend angesteuert wird.

6. Verfahren nach Anspruch 4, **dadurch gekennzeichnet, dass** die Drehzahl (n_{Q}) der Querfördereinrichtung (2) der Drehzahländerung der Einzugselemente (4,5) entsprechend einer vorgegebenen Regelkurve progressiv steigend oder degressiv fallend angesteuert wird.

7. Vorrichtung zur Anwendung des Verfahrens zum Betreiben eines Vorsatzgeräts (1), insbesondere für Feldhäcksler, Ballenpressen oder Selbstladewagen, mit wenigstens drei umlaufend angetriebenen Einheiten, bestehend aus wenigstens einer Aufnahmeeinheit (3), einer Querfördereinrichtung (2) und einer dieser nach geordneten Erntegut weiterverarbeitenden Einheit (4, 5), wobei die Antriebe der Einheiten (2, 3, 4, 5) einen verzweigten Antriebsstrang bilden und der verzweigte Antriebsstrang wenigstens eine Drehmoment aufspaltende Getriebeeinheit (14) aufweist, **dadurch gekennzeichnet, dass** der Antrieb der Querfördereinrichtung (2) Teil einer leistungsverzweigten Getriebeeinheit (14) ist und die Getriebeeinheit (14) wenigstens einen ersten Antriebseingang (37) und einen zweiten Antriebseingang (38) mit wenigstens zwei Abtriebsausgängen (39,40) aufweist, wobei der erste Antriebseingang (37) Teil eines vorgelagerten Antriebsstrangs mit einer Verbindung zur Abtriebswelle des Verbrennungsmotors des Träger- oder Zugfahrzeugs ist und über eine Durchgangswelle (15) mit einem ersten Abtriebsausgang (39) zum direkten Antrieb der Aufnahmeeinheit (3) verbunden ist und der zweite Antriebseingang (38) einen in seiner Motordrehzahl (n_{M}) ansteuer- und/oder regelbaren Nebenantriebsmotor (23) umfasst, wobei der erste Antriebseingang (37) und der zweite Antriebseingang (38) über ein Planetenradgetriebe (27) gekoppelt sind derart, dass über einen zweiten Abtriebsausgang (40) die Abtriebsdrehzahl (n_{Q}) zum Antrieb der Querfördereinrichtung (2) veränderbar ist.

8. Vorrichtung nach Anspruch 7, **dadurch gekennzeichnet, dass** der Nebenantriebsmotor (23) ein Drehzahl regelbarer Hydraulikmotor ist.

9. Vorrichtung nach Anspruch 8, **dadurch gekennzeichnet, dass** der Nebenantriebsmotor (23) als Hydraulikmotor von einer Verstellpumpe beaufschlagt wird .

10. Vorrichtung nach Anspruch 7, **dadurch gekennzeichnet, dass** der Nebenantriebsmotor (23) ein Drehzahl regelbarer Elektromotor ist.

11. Vorrichtung nach Anspruch 10 **dadurch gekennzeichnet, dass** der Nebenantriebsmotor (23) als Elektromotor als Gleichstrommotor ausgebildet ist.

12. Vorrichtung nach Anspruch 10 **dadurch gekennzeichnet, dass** der Nebenantriebsmotor (23) als Elektromotor als Wechselstrommotor ausgebildet ist.

13. Vorrichtung nach einem der Ansprüche 8 bis 12 **dadurch gekennzeichnet, dass** der Nebenantriebsmotor (23) als Getriebemotor ausgebildet ist.

14. Vorrichtung nach einem oder mehreren der Ansprüche 7 bis 13, **dadurch gekennzeichnet, dass** die Drehzahl (n_{Q}) und die Drehrichtung der Querfördereinrichtung (2) fernbedienbar aus Fahrerkabine vom Fahrerplatz des Träger- oder Zugfahrzeugs gesteuert werden kann.

## Claims

1. A method of operating a front-mounted implement (1), in particular for forage harvesters, bale presses or self-loading wagons, comprising at least three units which are driven in rotation, comprising at least a pick-up unit (3), a transverse conveyor device (2) and a unit (4, 5) connected downstream thereof for subjecting crop material to further processing, wherein the drives of the units (2, 3, 4, 5) form a split drive train and the split drive train has at least one torque-splitting transmission unit (14), **characterised in that** the drive of the transverse conveyor device (2) is part of a power-split transmission unit (14), and the transmission unit (14) has at least a first drive input (37) and a second drive input (38) and at least two drive outputs (39, 40), wherein the first drive input (37) is part of a drive train with a mechanical coupling and connecting device in relation to the drive output shaft of the internal combustion engine of the carrier or tractor vehicle and is connected by way of a throughput shaft (15) to a first drive output (39) for directly driving the pickup unit (3) and the second drive input (38) includes a power take-off motor (23) which is actuable and/or regulatable in its motor rotary speed (n_{M}), wherein the drive torque (M3) of the first drive input (37) and the drive torque (M7) of the second drive input (38) are coupled together by way of a planetary transmission (27) in accordance with the superposition principle in such a way that the rotary speed (n_{Q}) of the transverse conveyor device (2) is remotely operably controlled or regulated by way of a second drive output (40) from the driving cab or in dependence on a regulating process dependent on the flow of material.

2. A method according to claim 1 **characterised in that** the transmission unit (14) is part of a control chain.

3. A method according to claim 1 **characterised in that** the transmission unit (14) is part of a regulating section.

4. A method according to claim 1 **characterised in that** the rotary speed of the intake elements (4, 5) is detected in dependence on the flow of material (22) and used as a process control parameter for regulation of the rotary speed (n_{Q}) of the transverse conveyor device (2).

5. A method according to claim 4 **characterised in that** the rotary speed (n_{Q}) of the transverse conveyor device (2) is controlled in a proportional, over-proportionally rising or over-proportionally falling relationship with respect to the change in the rotary speed of the intake elements (4, 5) in accordance with a predetermined regulating curve.

6. A method according to claim 4 **characterised in that** the rotary speed (n_{Q}) of the transverse conveyor device (2) is controlled in a progressively rising or degressively falling relationship with respect to the change in the rotary speed of the intake elements (4, 5) in accordance with a predetermined regulating curve.

7. Apparatus for applying the method of operating a front-mounted implement (1), in particular for forage harvesters, bale presses or self-loading wagons, comprising at least three units which are driven in rotation, comprising at least a pick-up unit (3), a transverse conveyor device (2) and a unit (4, 5) connected downstream thereof for subjecting crop material to further processing, wherein the drives of the units (2, 3, 4, 5) form a split drive train and the split drive train has at least one torque-splitting transmission unit (14), **characterised in that** the drive of the transverse conveyor device (2) is part of a power-split transmission unit (14), and the transmission unit (14) has at least a first drive input (37) and a second drive input (38) with at least two drive outputs (39, 40), wherein the first drive input (37) is part of an upstream-disposed drive train with a connection in relation to the drive output shaft of the internal combustion engine of the carrier or tractor vehicle and is connected by way of a throughput shaft (15) to a first drive output (39) for directly driving the pickup unit (3) and the second drive input (38) includes a power take-off motor (23) which is actuable and/or regulatable in its motor rotary speed (n_{M}), wherein the first drive input (37) and the second drive input (38) are coupled by way of a planetary transmission (27) in such a way that the drive output rotary speed (n_{Q}) for driving the transverse conveyor device (2) is variable by way of a second drive output (40).

8. Apparatus according to claim 7 **characterised in that** the power take-off motor (23) is a rotary speed-regulatable hydraulic motor.

9. Apparatus according to claim 8 **characterised in that** the power take-off motor (23) is acted upon as a hydraulic motor by a displacement pump.

10. Apparatus according to claim 7 **characterised in that** the power take-off motor (23) is a rotary speed-regulatable electric motor.

11. Apparatus according to claim 10 **characterised in that** the power take-off motor (23) is in the form of an electric motor in the form of a dc motor.

12. Apparatus according to claim 10 **characterised in that** the power take-off motor (23) is in the form of an electric motor in the form of an ac motor.

13. Apparatus according to one of claims 8 to 12 **characterised in that** the power take-off motor (23) is in the form of a gear motor.

14. Apparatus according to one or more of claims 7 to 13 **characterised in that** the rotary speed (n_{Q}) and the direction of rotation of the transverse conveyor device (2) can be controlled in remotely operable fashion from the driving cab from the driving position of the carrier or tractor vehicle.

## Revendications

1. Procédé de fonctionnement d'un outil frontal (1), en particulier pour ensileuses, presses à balles ou autochargeuses, comportant au moins trois unités entraînées en rotation, composées d'au moins une unité de ramassage (3), un dispositif de transport transversal (2) et une unité de traitement d'un produit de récolte (4, 5) placée à la suite de celui-ci, les entraînements des unités (2, 3, 4, 5) formant une chaîne cinématique ramifiée et la chaîne cinématique ramifiée présentant au moins une transmission à division de couple (14), **caractérisé en ce que** l'entraînement du dispositif de transport transversal (2) fait partie d'une unité de transmission à dérivation de puissance (14), et **en ce que** l'unité de transmission (14) présente au moins une première entrée de mouvement (37) et une deuxième entrée de mouvement (38) et au moins deux sorties de mouvement (39, 40), la première entrée de mouvement (37) faisant partie d'une chaîne cinématique comprenant un dispositif mécanique d'accouplement et de liaison à l'arbre de sortie du moteur à combustion du véhicule porteur ou tracteur et étant reliée par l'intermédiaire d'un arbre traversant (15) à une première sortie de mouvement (39) pour l'entraînement direct de l'unité de ramassage (3), et la deuxième entrée de mouvement (38) comprenant un moteur d'entraînement auxiliaire (23) dont la vitesse de rotation (n_{M}) peut être commandée et/ou régulée, le couple d'entraînement (M3) de la première entrée de mouvement (37) et le couple d'entraînement (M7) de la deuxième entrée de mouvement (38) étant couplés par l'intermédiaire d'un engrenage planétaire (27) selon le principe de superposition, de façon que la vitesse de rotation (n_{Q}) du dispositif de transport transversal (2) puisse être télécommandée, par l'intermédiaire d'une deuxième sortie de mouvement (40), depuis la cabine de conduite ou commandée ou régulée en fonction d'un processus de régulation dépendant du flux de produit.

2. Procédé selon la revendication 1, **caractérisé en ce que** l'unité de transmission (14) fait partie d'une chaîne de commande.

3. Procédé selon la revendication 1, **caractérisé en ce que** l'unité de transmission (14) fait partie d'une chaîne de régulation.

4. Procédé selon la revendication 1, **caractérisé en ce que** la vitesse de rotation des éléments d'alimentation (4, 5) est détectée en fonction du flux de produit (22) et utilisée comme variable de conduite de processus pour la régulation de la vitesse de rotation (n_{Q}) du dispositif de transport transversal (2).

5. Procédé selon la revendication 4, **caractérisé en ce que** la vitesse de rotation (n_{Q}) du dispositif de transport transversal (2) est commandée, suivant une courbe de régulation prédéfinie, de manière proportionnelle, surproportionnellement croissante ou surproportionnellement décroissante en fonction de la variation de vitesse de rotation des éléments d'alimentation (4, 5).

6. Procédé selon la revendication 4, **caractérisé en ce que** la vitesse de rotation (n_{Q}) du dispositif de transport transversal (2) est commandée suivant une courbe de régulation prédéfinie de manière progressivement croissante ou dégressivement décroissante en fonction de la variation de vitesse de rotation des éléments d'alimentation (4, 5).

7. Dispositif pour appliquer le procédé de fonctionnement d'un outil frontal (1), en particulier pour ensileuses, presses à balles ou autochargeuses, comportant au moins trois unités entraînées en rotation, composées d'au moins une unité de ramassage (3), un dispositif de transport transversal (2) et une unité de traitement d'un produit de récolte (4, 5) placée à la suite de celui-ci, les entraînements des unités (2, 3, 4, 5) formant une chaîne cinématique ramifiée et la chaîne cinématique ramifiée présentant au moins une transmission à division de couple (14), **caractérisé en ce que** l'entraînement du dispositif de transport transversal (2) fait partie d'une unité de transmission à dérivation de puissance (14), et l'unité de transmission (14) présente au moins une première entrée de mouvement (37) et une deuxième entrée de mouvement (38) avec au moins deux sorties de mouvement (39, 40), la première entrée de mouvement (37) faisant partie d'une chaîne cinématique montée en amont et reliée à l'arbre de sortie du moteur à combustion du véhicule porteur ou tracteur et étant reliée par l'intermédiaire d'un arbre traversant (15) à une première sortie de mouvement (39) pour l'entraînement direct de l'unité de ramassage (3), et la deuxième entrée de mouvement (38) comprenant un moteur d'entraînement auxiliaire (23) dont la vitesse de rotation (n_{M}) peut être commandée et/ou régulée, la première entrée de mouvement (37) et la deuxième entrée de mouvement (38) étant couplées par l'intermédiaire d'un engrenage planétaire (27), de façon que la vitesse de rotation de sortie (n_{Q}) pour l'entraînement du dispositif de transport transversal (2) soit modifiable par l'intermédiaire d'une deuxième sortie de mouvement (40).

8. Dispositif selon la revendication 7, **caractérisé en ce que** le moteur d'entraînement auxiliaire (23) est un moteur hydraulique à vitesse de rotation réglable.

9. Dispositif selon la revendication 8, **caractérisé en ce que** le moteur d'entraînement auxiliaire (23) conçu comme moteur hydraulique est alimenté par une pompe à débit variable.

10. Dispositif selon la revendication 7, **caractérisé en ce que** le moteur d'entraînement auxiliaire (23) est un moteur électrique à vitesse de rotation réglable.

11. Dispositif selon la revendication 10, **caractérisé en ce que** le moteur d'entraînement auxiliaire (23) conçu comme moteur électrique est réalisé sous la forme d'un moteur à courant continu.

12. Dispositif selon la revendication 10, **caractérisé en ce que** le moteur d'entraînement auxiliaire (23) conçu comme moteur électrique est réalisé sous la forme d'un moteur à courant alternatif.

13. Dispositif selon une des revendications 8 à 12, **caractérisé en ce que** le moteur d'entraînement auxiliaire (23) est réalisé sous la forme d'un motoréducteur.

14. Dispositif selon une ou plusieurs des revendications 7 à 13, **caractérisé en ce que** la vitesse de rotation (n_{Q}) et le sens de rotation du dispositif de transport transversal (2) peuvent être télécommandés depuis le poste de conduite de la cabine de conduite du véhicule porteur ou tracteur.
